# EUROPÄISCHE PATENTSCHRIFT

(11) **EP 3 080 472 B1**
(45) Veröffentlichungstag und Bekanntmachung des Hinweises auf die Patenterteilung: **06.09.2017**
(21) Anmeldenummer: 14814751.5
(22) Anmeldetag: 17.11.2014
(51) Int. Cl.: F16D 25/08

(54) **GEBERZYLINDER**
MASTER CYLINDER
CYLINDRE ÉMETTEUR

(30) Priorität: 09.12.2013 DE 102013225270
(43) Veröffentlichungstag der Anmeldung: 19.10.2016
(73) Patentinhaber: Schaeffler Technologies AG & Co. KG, 91074 Herzogenaurach (DE)
(72) Erfinder: NIESEN, Thomas, 76227 Karlsruhe (DE)
(86) Internationale Anmeldenummer: PCT/DE2014/200639
(87) Internationale Veröffentlichungsnummer: WO 2015/086010

(56) Entgegenhaltungen:
- WO-A1-2011/006305
- DE-A1-102011 055 645
- DE-A1-102012 221 008

## Beschreibung

Die Erfindung betrifft einen Geberzylinder, insbesondere für die Kupplungsbetätigung eines Fahrzeuges, nach dem Oberbegriff des ersten Patentanspruchs. Bei bekannten hydraulischen Geberzylindern (CMC) bestehen die im Gehäuse angeordneten beweglichen Teile im Wesentlichen aus Kolben, Sekundärdichtung, Armierung, Primärdichtung und Zentrierring mit Tannenbaumgeometrie. Der Kolben wird dabei aus Kunststoff gefertigt und weist im Bereich der statischen Dichtfläche eine Trennlinie mit Grat/Versatz auf, da er mittels einer Werkzeugtrennung hergestellt ist. Problematisch dabei ist, dass der Grat/Versatz in einer Wareneingangsprüfung nicht detektiert wird. Zur Montage des Kolbens wird nun mittels eines Konus die Sekundärdichtung auf den Kolben montiert. Gleichzeitig werden auf den Zentrierring die Primärdichtung und die Armierung der Primärdichtung montiert. Sind diese beiden Einheiten vormontiert, werden sie miteinander verpresst. Die Tannenbaumgeometrie stellt hierbei sicher, dass sich die Verbindung nicht selbstständig wieder löst. Der Grat/Versatz am Kolben führt über die Lebensdauer des Produkts zu einer Undichtigkeit, die in der Dichtheitsprüfung am Ende der Montagelinie nicht festgestellt wird, da sie erst nach einer gewissen Zeit im Betrieb auftritt. Diese Undichtigkeit kann somit zu teueren Reklamationen führen.

Aus der Druckschrift DE 195 36 610 A1 ist ein Kolben für einen Geberzylinder bekannt, der ebenfalls aus Kunststoff besteht. Eine Dichtmanschette wird am Kolben durch eine Schulter eines Halteelements gegen Verrutschen gesichert. Um zu vermeiden, dass die zur Herstellung notwendigen Querschieber einen Grat an der Kolbenschulter verursachen, wird die Schulter nicht an den Kolben angespritzt, sondern an einem Halteelement angeordnet.

In der Druckschrift DE 10 2007 034 616 A1 wird ebenfalls ein Kolben für einen Zylinder, insbesondere für einen Geberzylinder oder Nehmerzylinder eines hydraulischen Systems, zur Betätigung einer Fahrzeugkupplung oder Betriebsbremse eines Kraftfahrzeuges, beschrieben, wobei der Kolben und der Zylinder einen Druckraum einschließen, der mittels einer Dichtung gegenüber einem Nachlaufraum oder gegenüber der Umgebung abgedichtet ist. Der Kolben weist eine Dichtungsaufnahme mit einem im Wesentlichen kegelförmigen Dichtungssitz zur Aufnahme der Dichtung auf. Um bei dieser Lösung die Zuverlässigkeit der Dichtungswirkung zwischen Kolben und Dichtung zu verbessern, weist der Kolben eine Dichtungsaufnahme mit einem im Wesentlichen kegelförmigen Dichtungssitz zur Aufnahme der Dichtung auf, die eine umlaufende Ringnut umfasst, in die eine umlaufende Ausbuchtung der Dichtung eingreift. Durch das Umgreifen der Ringnut durch die Ausbuchtung wird eine formschlüssige Verbindung zwischen Kolben und Dichtung hergestellt. Die Dichtung kann zur Montage über den kegelförmigen Dichtungssitz aufgeschoben werden. Die Dichtung besitzt am Innendurchmesser des Dichtungsrückens zusätzlich eine Ausbuchtung. Diese greift in die umlaufende Nut des Kolbens ein. Hierdurch wird die Dichtung am Kolben fixiert. Die Abdichtung zwischen Kolben und Dichtung findet an der inneren Lippe der Dichtung statt. An dieser Stelle kann der Kunststoffkolben in axialer Richtung entformt werden, wodurch der Dichtungssitz keinen Werkzeugversatz besitzt bzw. gratfrei ist. Nachteilig dabei ist, dass die Montage der Sekundärdichtung mittels eines Konus (Werkzeug) über eine Durchmessererweiterung zu einer Aufdehnung der Dichtung führt, wodurch die die Gefahr besteht, dass die Dichtung vorgeschädigt wird. Eine Vorschädigung ist dabei frühestens bei der Dichtheitsprüfung am Ende der Montagelinie zu identifizieren und führt bei einer Entdeckung zu erheblichen Ausschuss. Die zusätzliche Schmierung der Sekundärdichtung durch Fett bzw. Montagefluid dient der Erleichterung der Montage, führt aber ungewollt ebenfalls zu einem kurzfristigen Abdichten einer eventuell schadhaften Dichtung oder eines Dichtungssitzes (Grat/ Versatz auf Kolben). Die Montage der Primärdichtung mit Armierung auf dem Zentrierring birgt zudem die Gefahr, dass die Armierung beim Transport zur Montagestation mit dem Kolben verlorengeht. Diese fehlende Armierung wird ebenfalls frühestens am Ende der Montagelinie auffällig, wodurch wiederum erheblicher Ausschuss und damit Kosten entstehen. Zusätzlich besteht die Gefahr von erhöhtem Ausschuss bei der Leerweg-Prüfung des CMC's am Ende der Montagelinie. Vor dieser Prüfung wird der Geberzylinder einseitig mit Druck beaufschlagt der das Dichtungspaket von der Montageposition in seine endgültige Position bringen muss. Ist der Druck nicht hoch genug ergibt sich daher eine ungenügender Leerweg und damit Ausschuss. Insgesamt kommt es bei den bekannten Systemen zu Undichtigkeiten des Geberzylinders und somit des gesamten Kupplungsausrücksystems.

Die Veröffentlichung DE 10 2012 221 008 A1 zeigt einen Geberzylinder mit einem axial beweglichen Kolben, bei dem Sekundärdichtung und eine dazu axial beabstandete Primärdichtung aufnimmt, welche mittels einer Armierung fixiert ist. Weiterhin ist die Primärdichtung mittels eines Zentrierrings am Kolben befestigt.

Die WO 2011/006305 A1 offenbart einen Kolben für einen Tandemhauptzylinder. Der Kolben weist einen zylindrischen Körper mit etwa gleichbleibendem Außendurchmesser auf, in dem eine Hohlkammer ausgebildet ist. Die Hohlkammer ist durch einen dem einen Ende des zylindrischen Körpers benachbarten und am anderen Ende offenen Teilungsabschnitt abgesperrt. Der Kolben kann durch Spritzgießen hergestellt werden, ohne dass komplizierte Formen erforderlich sind.

Aus der deutschen Offenlegungsschrift DE 10 2011 055 645 A1 ist ein Hauptzylinder, insbesondere für ein Kupplungs-, Betätigungs- oder Bremssystem eines Fahrzeugs, offenbart, welcher mit geringem Aufwand herstellbar ist und eine sichere Abdichtung einer Zylinderkammer nach außen sowie ein zuverlässiges Nachströmen von Hydraulikmedium in die Zylinderkammer ermöglichen soll. Der Kolben des Hauptzylinders weist einen ersten Abschnitt auf mit einer zylindrischen Mantelfläche, und einen zweiten Abschnitt, welcher mindestens einen gegenüber der zylindrischen Mantelfläche des ersten Abschnitts radial nach innen zurückversetzt Bereich ist, auf. Dabei erstreckt sich mindestens ein zurückversetzter Bereich bis zu einer der Zylinderkammer zugewandten Stirnseite des Kolbens.

Aufgabe der Erfindung ist es, einen Geberzylinder, insbesondere für die Kupplungsbetätigung eines Fahrzeuges zu entwickeln, der einen einfachen konstruktiven Aufbau aufweist, einfach und sicher montierbar ist und der Undichtigkeiten weitestgehend oder vollständig beseitigt. Diese Aufgabe wird durch die kennzeichnenden Merkmale des ersten Patentanspruchs gelöst.

Vorteilhafte Ausgestaltungen ergeben sich aus den Unteransprüchen.

Der Geberzylinder weist einen in einem Gehäuse entlang einer Längsachse axial beweglichen Kolben auf, der eine Sekundärdichtung und eine dazu axial beabstandete, vorzugsweise mittels einer Armierung fixierte, Primärdichtung aufnimmt, die durch einen Zentrierring am Kolben befestigt ist, wobei der Kolben erfindungsgemäß zumindest zwischen der Sekundärdichtung und der Armierung der Primärdichtung eine, einen Grat vermeidende, axial entformbare konstruktive Gestaltung aufweist. Außerdem ist zwischen Sekundärdichtung und Zentrierring ist eine, den axialen Abstand zwischen Primärdichtung und Sekundärdichtung gewährleistende, Hülse angeordnet. Weiterhin weist der Kolben im Bereich der Sekundärdichtung einen ersten Außendurchmesser auf und ist in Richtung zur Primärdichtung mit einem im Vergleich zum ersten Außendurchmesser geringeren zweiten Außendurchmesser versehen. Die Hülse greift in Richtung zur Primärdichtung mit ihrem Innendurchmesser über den ersten Außendurchmesser des Kolbens und stützt sich in Richtung zur Primärdichtung mit einem radial nach innen weisenden Rand im Bereich des zweiten Außendurchmessers des Kolbens ab. Der Außendurchmesser der Hülse ist bevorzugt zylindrisch ausgebildet. Die Armierung und die Primärdichtung sitzen bevorzugt auf dem zweiten Durchmesser des Kolbens.

Dadurch ist es möglich, dass die einzelnen Kunststoffbauteile ohne eine radiale Formtrennung aus dem Werkzeug entformt werden können, wodurch das Auftreten von Graten oder Versätzen auf dem fertigen Bauteil vermieden wird. Dadurch werden Undichtigkeiten des Geberzylinders und somit des gesamten Kupplungsausrücksystems vermieden. Weiterhin muss die Sekundärdichtung nicht mehr über eine Durchmessererweiterung montiert werden. Dies vereinfacht deren Montage und vermeidet die Aufdehnung und die damit verbundene Gefahr der Beschädigung der Sekundärdichtung.

Zur Gewährleistung einer axialen Entformbarkeit verringert sich der Außendurchmesser des Kolbens von dem Bereich der Sekundärdichtung in Richtung zur Primärdichtung.

Es ist möglich, dass der Zentrierring in eine Ausnehmung des Kolbens eingreift und darin fixiert ist oder dass der Zentrierring eine Ausnehmung aufweist, in welche ein sich axial erstreckender Vorsprung des Kolbens eingreift, wodurch Kolben und Zentrierring miteinander verbunden werden.

Es ist jedoch auch möglich, dass der in eine zentrische Ausnehmung des Kolbens mit einem sich axial erstreckenden Vorsprung eingreifende Zentrierring einen sich an den zweiten Außendurchmesser des Kolbens anschließenden dritten Außendurchmesser aufweist, der im wesentlichen dem zweiten Außendurchmesser des Kolbens entspricht und dass die Armierung der Primärdichtung und die Primärdichtung auf dem dritten Außendurchmesser des Zentrierrings sitzen.

In jedem Fall weist der Zentrierring nach der Primärdichtung einen sich radial nach außen erstreckenden Absatz auf, der die Primärdichtung axial fixiert.

Die erfinderische Lösung stellt insgesamt ein neues Design der einzelnen Bauteile zur Verfügung, welches es erlaubt, insbesondere das Kunststoffbauteil in Form des Kolbens ohne eine Formtrennung im Werkzeug zu entformen. Hierdurch ist das Auftreten von Graten oder Versätzen auf dem fertigen Bauteil nicht möglich. Zusätzlich ist die konstruktive Ausgestaltung so angepasst, dass ein Zusammenbau aller mit dem Kolben montierten Einzelteile vereinfacht bzw. effizienter wird. Durch die Summe der neuen Merkmale werden die Nachteile der bisherigen Lösung vermieden.

Es wird ein gratfreier Kolben zumindest im Bereich des Dichtungssitzes durch Herstellung ohne Formtrennung zur Verfügung gestellt. Durch die Vermeidung einer Durchmessererweiterung des Kolbens, über welche bisher die Sekundärdichtung montiert werden musste, kann nun eine werkzeuglose Montage der Sekundärdichtung erfolgen, wobei eine unnötige und nachteilige Aufdehnung der Sekundärdichtung vermieden wird. Weiterhin kann eine zusätzliche Schmierung der Sekundärdichtung durch Fett bzw. Montagefluid entfallen.
Ein weiterer Vorteil besteht in dem sicheren Einbau des Primärdichtungs-Paketes ohne Verlust der Armierung.

Sicherer wird ebenfalls die Prüfung des CMC Leerweges am Ende der Montagelinie.

Die Erfindung wird nachfolgend anhand von Ausführungsbeispielen und zugehörigen Zeichnungen näher erläutert.

Es zeigen:

Die Figuren 1-3 Varianten des Unterzusammenbaus (UZSB) des Kolbens eines Geberzylinders aus den Einzelteilen Kolben, Sekundärdichtung, Armierung, Primärdichtung, Zentrierring, Hülse und dabei:
- Figur 1: eine erste Variante des (UZSB) des Kolbens eines Geberzylinders, bei welcher der Kolben eine Ausnehmung aufweist, in welche der Zentrierring eingreift und fixiert ist, wobei die Armierung und die Primärdichtung auf dem zweiten Außendurchmesser des Kolbens sitzen,
- Figur 2: eine zweite Variante des (UZSB) des Kolbens eines Geberzylinders, bei welcher der Kolben eine Ausnehmung aufweist, in welche der Zentrierring eingreift und fixiert ist, wobei die Armierung und die Primärdichtung auf einem dritten Außendurchmesser des Zentrierrings sitzen,
- Figur 3: eine dritte Variante des (UZSB) eines Geberzylinders, bei welcher der Zentrierring eine Ausnehmung aufweist, in welche der Kolben eingreift und
- Figur 4: die Explosivdarstellung gemäß Figur 3.

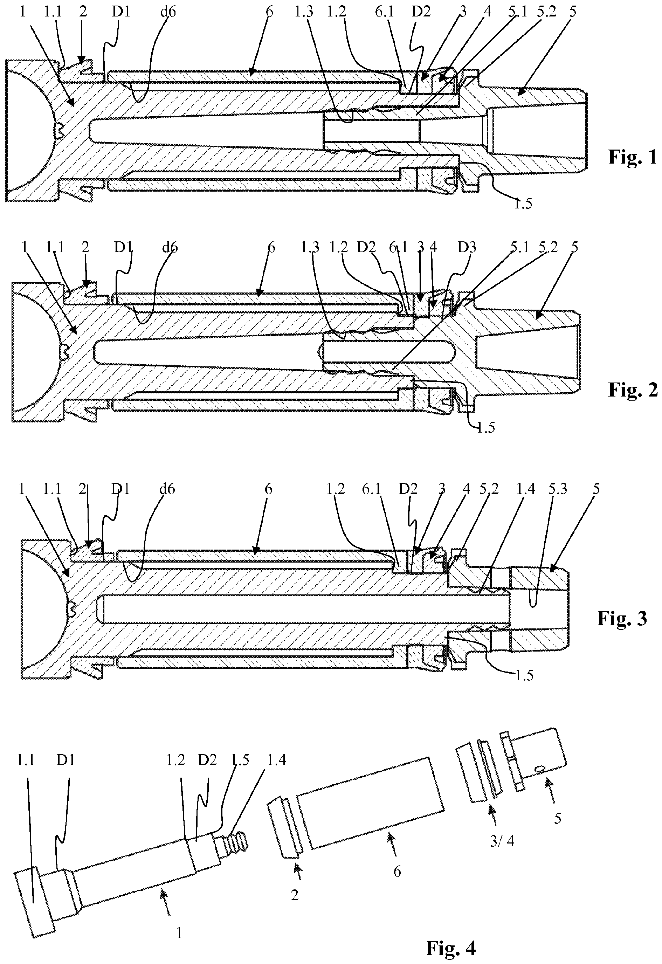

Gemäß der Figuren 1-3 weist der Unterzusammenbau (UZSB) eines Kolbens eines Geberzylinders die Einzelteile Kolben 1, Sekundärdichtung 2, Armierung 3, Primärdichtung 4 und Zentrierring 5 auf. Es wird weiterhin eine Hülse 6 benötigt.

Der Kolben 1 weist bei allen Varianten einen Bund 1.1 auf, an den sich ein erster Durchmesser D1 anschließt, auf dem die Sekundärdichtung 2 sitzt. Beabstandet von der Sekundärdichtung 2 sitzen auf einem zweiten Durchmesser D2 des Kolbens 1, der kleiner ist als D1, die Armierung 3 und die Primärdichtung 4 (Figuren 1 und 3).

Zwischen der Sekundärdichtung 2 und der Armierung 3 erstreckt sich die Hülse 6, die mit ihrem Innendurchmesser d6 über den ersten Durchmesser D1 greift, so dass die Hülse 6 durch den ersten Durchmesser D1 zentriert wird. An dem anderen Ende weist die Hülse 6 einen radial nach innen weisenden Bund 6.1 auf, dessen nicht bezeichneter Innendurchmesser mit dem zweiten Durchmesser D2 des Kolbens 1 korrespondiert und der an einem Absatz 1.2 des Kolbens 1 anliegt.

Der Kolben 1 weist in Figur 1 und 2 an dem Ende mit dem kleineren Durchmesser D2 eine sich axial erstreckende Ausnehmung 1.3 auf, in welche der Zentrierring 5 mit einem sich axial erstreckenden Vorsprung 5.1, der eine Tannenbaumgeometrie aufweist, eingreift und dadurch darin fest fixiert sitzt.

Im Gegensatz dazu wird in Figur 3 eine dritte Variante des (UZSB) eines Geberzylinders gezeugt, bei welcher der Zentrierring 5 eine Ausnehmung 5.3 aufweist, in welche der Kolben 1 mit einem sich axial erstreckenden Vorsprung 1.4 eingreift.

Der UZSB nach Figur 2 unterscheidet sich zu den Varianten in den Figuren 1 und 3 dadurch, dass die Armierung 3 und die Primärdichtung 4 auf einem dritten Durchmesser D3 des Zentrierrings 5 sitzen, der sich an den zweiten Durchmesser D2 des Kolbens 1 anschließt. Aus Figur 4 geht die Explosionsdarstellung der Einzelteile gemäß Figur 3 hervor. Die Montage erfolgt wie nachfolgend beschrieben:
Auf den Kolben 1 wird die Sekundärdichtung 2 bis über den Durchmesser D1 vorzugsweise unter Verwendung der Hülse 6 geschoben, so dass die Sekundärdichtung 2 am dem Absatz 1.1 des Kolbens 1 anliegt. Über den Kolben 1 wurde damit die Hülse 6 montiert, bis diese mit dem Bund 6.1 an dem Absatz 1.2 des Kolbens 1 anliegt, wobei der Innendurchmesser D6 der Hülse 6 mit dem ersten Außendurchmesser D1 des Kolbens 1 zusammenfällt. Nun werden die Armierung 3 und die Primärdichtung 5 über den zweiten Durchmesser D2 des Kolbens 1 montiert. Zuletzt wird der Zentrierring 5 aufgepresst, wobei bei der hier in Figur 3 und 4 dargestellten Variante der sich axial erstreckende Vorsprung 1.4 (mit Tannenbaumgeometrie) des Kolbens 1 in die Ausnehmung 5.3 des Zentrierrings 5 eingreift.

Bei den Varianten in den Figuren 1 und 2 wird der Zentrierring 5 mit seinem Vorsprung 5.1 (mit Tannenbaumgeometrie) in die Ausnehmung 1.3 des Kolbens 1 gepresst.

In allen drei Fällen legt sich der Zentrierring 5 mit einem Flansch 5.2 an einer Stirnseite 1.5 des Kolbens 1 an und fixiert Sekundärdichtung 2, Hülse 6, Armierung 3 und Primärdichtung 4 auf dem Kolben 1.

Insbesondere aus Figur 4 ist ersichtlich, dass alle Komponenten des Unterzusammenbaus (UZSB) des Kolbens 1 in einer Aufspannung, d.h. ohne aufwendiges Umgreifen, montiert werden können.

Durch die erfindungsgemäße Lösung wird eine gratfreie Fertigung des Kolbens gewährleistet, wodurch die Lebensdauer erhöht und die Montage verbessert werden kann.

Es wird somit ein gratfreier Kolben im Bereich des Dichtungssitzes bereitgestellt und eine werkzeuglose Montage der Sekundärdichtung realisierbar. Es wird bei der Montage keine Aufdehnung der Sekundärdichtung verursacht und ein sicherer Einbau des Primärdichtungs-Paketes ohne Verlust der Armierung gewährleistet. Ein weiterer positiver Aspekt besteht in der verbesserten Prüfung des CMC Leerweges und in dem weitestgehenden Verzicht auf Montagefluide und Befettung für den Kolben der UZSB.

### Bezugszeichenliste

- 1: Kolben
- 1.1: Bund
- 1.2: Absatz
- 1.3: Ausnehmung
- 1.4: Vorsprung
- 1.5: Stirnseite
- 2: Sekundärdichtung
- 3: Armierung
- 4: Primärdichtung
- 5: Zentrierring
- 5.1: Vorsprung
- 5.2: Flansch
- 5.3: Ausnehmung
- 6: Hülse
- 6.1: Bund
- D1: erster Durchmesser
- D2: zweiter Durchmesser
- D3: dritter Durchmesser
- d6: Innendurchmesser

## Patentansprüche

1. Geberzylinder, insbesondere für die Kupplungsbetätigung eines Fahrzeuges, mit einem in einem Gehäuse entlang einer Längsachse axial beweglichen Kolben (1), der einer Sekundärdichtung (2) und eine dazu axial beabstandete, insbesondere mittels einer Armierung (3) fixierte, Primärdichtung (4) aufnimmt, die mittels eines Zentrierrings (5) am Kolben (1) fixiert ist, **dadurch gekennzeichnet, dass** der Kolben (1) zwischen der Sekundärdichtung (2) und der Armierung (3) der Primärdichtung (4) eine, einen Grat vermeidende, axial entformbare Form aufweist, wobei zwischen Sekundärdichtung (2) und Zentrierring (5) eine den axialen Abstand zwischen Primärdichtung (4) und Sekundärdichtung (2) gewährleistende Hülse (6) angeordnet ist, **dadurch gekennzeichnet, dass** der Kolben (1) im Bereich der Sekundärdichtung (2) einen ersten Außendurchmesser (D1) aufweist, dass der Kolben (1) in Richtung zur Primärdichtung (4) einen im Vergleich zum ersten Außendurchmesser (D1) geringeren zweiten Außendurchmesser (D2) aufweist und dass die Hülse (6) in Richtung zur Primärdichtung (4) mit ihrem Innendurchmesser (d6) über den ersten Außendurchmesser (D1) des Kolbens (1) greift und sich in Richtung zur Primärdichtung (4) mit einem radial nach innen weisenden Rand im Bereich des zweiten Außendurchmessers (D2) des Kolbens (1) abstützt.

2. Geberzylinder nach Anspruch 1, **dadurch gekennzeichnet, dass** sich der Außendurchmesser des Kolbens (1) von dem Bereich der Sekundärdichtung (2) zu dem Bereich der Primärdichtung (4) verringert.

3. Geberzylinder nach einem der Ansprüche 1 oder 2, **dadurch gekennzeichnet, dass** der Zentrierring (5) in eine Ausnehmung (5.3) des Kolbens (1) eingreift und darin fixiert ist.

4. Geberzylinder nach einem der Ansprüche 1 oder 2, **dadurch gekennzeichnet dass** der Zentrierring (5) eine Ausnehmung (5.3) aufweist, in welche ein sich axial erstreckender Vorsprung (5.1) des Kolbens (1) eingreift.

5. Geberzylinder nach einem der Ansprüche 1 bis 4, **dadurch gekennzeichnet, dass** der in eine Ausnehmung (5.3) des Kolbens (1) eingreifende Zentrierring (5) einen sich an den zweiten Außendurchmesser (D2) des Kolbens (1) anschließenden dritten Außendurchmesser (D3) aufweist, der im wesentlichen dem zweiten Außendurchmesser (D2) des Kolbens (1) entspricht und dass die Armierung (3) der Primärdichtung (4) und die Primärdichtung (4) auf dem dritten Außendurchmesser (D3) des Zentrierrings (5) sitzen.

6. Geberzylinder nach Anspruch 5, **dadurch gekennzeichnet, dass** der Zentrierring (5) nach der Primärdichtung (4) einen sich radial nach außen erstreckenden Absatz (1.2) aufweist, der die Primärdichtung (4) axial fixiert.

## Claims

1. Master cylinder, in particular for the clutch actuation of a vehicle, having a piston (1) which can be moved axially along a longitudinal axis in a housing and receives a secondary seal (2) and a primary seal (4) which is spaced apart axially from the former, is fixed, in particular, by means of a reinforcement (3), and is fixed on the piston (1) by means of a centring ring (5), **characterized in that** the piston (1) has a shape which can be demoulded axially and avoids a burr between the secondary seal (2) and the reinforcement (3) of the primary seal (4), a sleeve (6) which ensures the axial spacing between the primary seal (4) and the secondary seal (2) being arranged between the secondary seal (2) and the centring ring (5), **characterized in that** the piston (1) has a first external diameter (D1) in the region of the secondary seal (2), **in that** the piston (1) has, in the direction of the primary seal (4), a second external diameter (D2) which is smaller in comparison with the first external diameter (D1), and **in that** the sleeve (6) engages in the direction of the primary seal (4) with its internal diameter (d6) over the first external diameter (D1) of the piston (1) and is supported in the direction of the primary seal (4) with a radially inwardly pointing edge in the region of the second external diameter (D2) of the piston (1).

2. Master cylinder according to Claim 1, **characterized in that** the external diameter of the piston (1) decreases from the region of the secondary seal (2) to the region of the primary seal (4).

3. Master cylinder according to either of Claims 1 and 2, **characterized in that** the centring ring (5) engages into a recess (5.3) of the piston (1) and is fixed therein.

4. Master cylinder according to either of Claims 1 and 2, **characterized in that** the centring ring (5) has a recess (5.3), into which an axially extending projection (5.1) of the piston (1) engages.

5. Master cylinder according to one of Claims 1 to 4, **characterized in that** the centring ring (5) which engages into a recess (5.3) of the piston (1) has a third external diameter (D3) which adjoins the second external diameter (D2) of the piston (1) and corresponds substantially to the second external diameter (D2) of the piston (1), and **in that** the reinforcement (3) of the primary seal (4) and the primary seal (4) are seated on the third external diameter (D3) of the centring ring (5).

6. Master cylinder according to Claim 5, **characterized in that**, behind the primary seal (4), the centring ring (5) has a shoulder (1.2) which extends radially to the outside and fixes the primary seal (4) axially.

## Revendications

1. Maître-cylindre, en particulier pour la commande d'embrayage d'un véhicule, comprenant un piston (1) déplaçable axialement le long d'un axe longitudinal dans un boîtier, qui reçoit un joint d'étanchéité secondaire (2) et un joint d'étanchéité primaire (4) espacé axialement de celui-ci, en particulier fixé au moyen d'une armature (3), qui est fixé au moyen d'une bague de centrage (5) sur le piston (1), **caractérisé en ce que** le piston (1), entre le joint d'étanchéité secondaire (2) et l'armature (3) du joint d'étanchéité primaire (4), présente une forme déformable axialement réduisant les arêtes, une douille (6) garantissant l'espacement axial entre le joint d'étanchéité primaire (4) et le joint d'étanchéité secondaire (2) étant disposée entre le joint d'étanchéité secondaire (2) et la bague de centrage (5), **caractérisé en ce que** le piston (1) présente, dans la région du joint d'étanchéité secondaire (2), un premier diamètre extérieur (D1), **en ce que** le piston (1) présente, dans la direction du joint d'étanchéité primaire (4), un deuxième diamètre extérieur (D2) inférieur au premier diamètre extérieur (D1) et **en ce que** la douille (6) s'engage dans la direction du joint d'étanchéité primaire (4) avec son diamètre intérieur (d6) par-dessus le premier diamètre extérieur (D1) du piston (1) et s'appuie dans la direction du joint d'étanchéité primaire (4) avec un bord tourné radialement vers l'intérieur dans la région du deuxième diamètre extérieur (D2) du piston (1).

2. Maître-cylindre selon la revendication 1, **caractérisé en ce que** le diamètre extérieur du piston (1) diminue depuis la région du joint d'étanchéité secondaire (2) vers la région du joint d'étanchéité primaire (4).

3. Maître-cylindre selon l'une quelconque des revendications 1 ou 2, **caractérisé en ce que** la bague de centrage (5) s'engage dans un évidement (5.3) du piston (1) et est fixée à l'intérieur de celui-ci.

4. Maître-cylindre selon l'une quelconque des revendications 1 ou 2, **caractérisé en ce que** la bague de centrage (5) présente un évidement (5.3) dans lequel s'engage une saillie (5.1) du piston (1) s'étendant axialement.

5. Maître-cylindre selon l'une quelconque des revendications 1 à 4, **caractérisé en ce que** la bague de centrage (5) s'engageant dans un évidement (5.3) du piston (1) présente un troisième diamètre extérieur (D3) se raccordant au deuxième diamètre extérieur (D2) du piston (1), qui correspond essentiellement au deuxième diamètre extérieur (D2) du piston (1) et **en ce que** l'armature (3) du joint d'étanchéité primaire (4) et le joint d'étanchéité primaire (4) reposent sur le troisième diamètre extérieur (D3) de la bague de centrage (5).

6. Maître-cylindre selon la revendication 5, **caractérisé en ce que** la bague de centrage (5) présente, après le joint d'étanchéité primaire (4), un épaulement (1.2) s'étendant radialement vers l'extérieur, qui fixe axialement le joint d'étanchéité primaire (4).
